# EUROPÄISCHE PATENTSCHRIFT

(11) **EP 3 669 821 B1**
(45) Veröffentlichungstag und Bekanntmachung des Hinweises auf die Patenterteilung: **21.06.2023**
(21) Anmeldenummer: 18213180.5
(22) Anmeldetag: 17.12.2018
(51) Int. Cl.: A61C 13/20, A61C 13/16

(54) **DENTALES KÜHLVERFAHREN**
DENTAL COOLING METHOD
PROCÉDÉ DE REFROIDISSEMENT DENTAIRE

(43) Veröffentlichungstag der Anmeldung: 24.06.2020
(73) Patentinhaber: Ivoclar Vivadent AG, 9494 Schaan (LI)
(72) Erfinder: Jussel, Rudolf, 6800 Feldkirch (AT); Tubic, Aleksandar, 1200 Wien (AT)
(74) Vertreter: Baldus, Oliver

(56) Entgegenhaltungen:
- CH-A- 267 808
- DE-A1-102006 036 132
- US-A- 1 949 227
- US-A1- 2016 195 334

## Beschreibung

Die Erfindung betrifft ein dentales Kühlverfahren, gemäß dem Oberbegriff von Anspruch 1, sowie eine entsprechende Kühlvorrichtung, gemäß dem Oberbegriff von Anspruch 15.

Es ist seit langem bekannt, dass insbesondere größere Muffeln wie solche mit einer Masse von 300g recht lange benötigen, um eine Entformungstemperatur zu erreichen.

Um die Abkühlung zu beschleunigen, ist es vorgeschlagen worden, einen Luftstrom zu erzeugen, der der Muffel von der Seite des Gebläses Luft mit Raumtemperatur zuführt.

Diese Lösung ergibt zwar eine etwas schnellere Abkühlung, hat jedoch den Nachteil, dass auf dem Luftstrom zugewandten Seite typischerweise kältere Luft als an der von dem Luftstrom abgewandten Seite vorliegt. Es entsteht insofern ein beträchtlicher lokaler Wärmegradient, der zu Spannungsrissen der Muffel führen kann, und gegebenenfalls auch das Dentalmaterial in der Muffel beeinträchtigt.

Versuche haben ergeben, dass durch die Kühlung mit dem Ventilator keine Qualitätsverbesserung der Restauration erzielbar ist.

Ferner ist es auch vorgeschlagen worden, die Muffel bereits im heißen Zustand zu teilen, mit dem Ziel, die Abkühlung zu verbessern. Dies kann beispielsweise mittels Sandstrahlen erfolgen.

Es besteht jedoch die Gefahr, dass durch das Grob-Sandstrahlen nicht nur der äußere Bereich der Muffel abgetragen wird, sondern auch das oder die Dentalrestaurationsteile beschädigt werden, was das Restaurationsergebnis insofern zunichtemacht.

Ein weiterer Nachteil dieses Verfahrens ist der enorme Verbrauch an Sandstrahlmittel. Das verwendete Sandstrahlmittel zusammen mit den heissen abgelösten Teilen der Muffel muss in einem dafür ausgelegten Gehäuse abgeführt werden, ohne Schäden an dem dafür verwendeten Gerät zu verursachen.

Die Druckschrift CH 267808 A1 offenbart eine mehrteilige dentale Muffel, bei der nach erfolgter Polymerisation in einem Heißwasserbad die Muffel durch eintauchen in kaltes Wasser wieder abgekühlt werden soll. Jedoch lässt sich durch das vollständige Eintauchen kaum die Abkühlgeschwindigkeit beeinflussen, was Nachteile für die enthaltene Dentalrstauration haben kann.

In der US1949227A wird die Abkühlung einer Gussform mittels fließendem Wasser beschrieben, was die weiter oben beschriebenen Nachteile noch verschärfen könnte.

Daher wird heutzutage ganz überwiegend das Entformen dergestalt vorgenommen, dass die Muffel samt dem dort eingebetteten Dentalrestaurationsteil oder den dort eingebetteten Dentalrestaurationsteilen auf eine Unterlage, bevorzugt mit Gitteröffnungen, gestellt wird und gewartet wird, bis diese soweit abgekühlt ist, dass ein Entformen ohne weiteres möglich ist.

Dieses Verfahren ist jedoch bekanntlich recht zeitaufwendig, wenn auch materialschonend.

Daher liegt der Erfindung die Aufgabe zugrunde, ein Verfahren zum Kühlen von dentalen Restaurationsprodukten gemäß dem Oberbegriff von Anspruch 1 zu schaffen, die die Vorteile bislang bekannter Verfahren ohne deren Nachteile miteinander verbindet, also eine rasche, aber dennoch materialschonende Kühlung von Dentalrestaurationsteilen mit keinen oder höchstens geringen ökonomischen Nachteilen zu erzielen.

Diese Aufgabe wird erfindungsgemäß durch Anspruch 1 gelöst. Vorteilhafte Weiterbildungen ergeben sich aus den Unteransprüchen.

Erfindungsgemäß ist es kurzerhand vorgesehen, eine Kältequelle mit einem bestimmten Medium, bevorzugt einem flüssigen Medium, der Muffel zuzuführen. Das Medium dringt, gerade, wenn es flüssig ist, in die Außenbereiche der Muffel ein, bevorzugt aber lediglich das äußere Drittel oder höchstens die äußere Hälfte, so dass kein Kontakt zwischen dem Medium und den Dentalrestaurationsteilen zustande kommen kann.

Erfindungsgemäß ist es vorgesehen, die zusätzliche Enthalpie, die bei einer Phasenübergangstemperatur des Mediums benötigt wird, auszunutzen.

Ein hier betrachteter Phasenübergang tritt von fest zu flüssig und von flüssig zu gasförmig auf.

Die Muffel ist zunächst auf einer höheren Temperatur als die Phasenübergangstemperatur des Mediums. Durch den intensiven thermischen Kontakt wird das Medium auf die Phasenübergangstemperatur erwärmt, und bevorzugt auch darüber hinaus.

Hierdurch wird automatisch die Phasenübergangs-Enthalpie des Mediums ausgenutzt, also beispielsweise die Verdampfungsenthalpie oder die Schmelzenthalpie oder auch beide. Insofern wird ein Latentwärmespeicher ausgenutzt.

Diese wird beim Phasenübergang ausgenutzt: Die Wärmeenergie der Muffel geht im Wesentlichen in die Verdampfungs- und/oder Schmelzenthalpie des Mediums und wird insofern aufgebraucht, so dass der Muffel intensiv Wärme entzogen wird, was zu einer überraschend raschen Kühlung des Außenbereichs der Muffel führt.

Überraschend lässt sich hiermit eine gleichmäßige und materialschonende Kühlung ohne der Gefahr von Spannungsrissen gewährleisten. Dies ist darauf zurückzuführen, dass die Kühlung ganz gleichmäßig erfolgen kann, indem das Medium von allen Seiten oder mindestens allen geeigneten Seiten gleichmäßig der Muffel zugeführt wird. Das Medium umgibt die Muffel ringsum.

Wenn die Muffel zylinderförmig ist, kann es bei der üblichen ausgeführten Ausgestaltung günstig sein, der Muffel im Bereich ihrer Mantelfläche das Medium zuzuführen und dort eindringen zu lassen und die Verdampfungsenthalpie oder Schmelzenthalpie des Mediums auszunutzen, um das Medium als Intensiv-Kältequelle zu verwenden.

Es versteht sich, dass vor der Zufuhr des Mediums zur Muffel das Medium auf eine Temperatur unterhalb der Phasenübergangstemperatur gekühlt ist.

Beispielsweise kann Wasser als Medium verwendet werden. Wasser hat eine Siedetemperatur von etwa 100 Grad Celsius und ist bei Raumtemperatur dementsprechend unterhalb dieser Phasenübergangstemperatur.

Wenn also das Medium in Form von Wasser einer Mantelfläche der Muffel bei Raumtemperatur zugeführt wird, während die Muffel noch auf einer hohen Temperatur wie beispielsweise 700 Grad ist, wirkt sich die Verdampfungsenthalpie von Wasser unmittelbar aus.

In vorteilhafter Ausgestaltung ist es vorgesehen, das Medium dosiert zuzuführen.

Bevorzugt wird zunächst ein geringer Teil des Mediums wie beispielsweise 1/10 der Mantelfläche der Muffel zugeführt. Sobald dieses Wasser verdampft ist, wird die Menge des Wassers, die zugeführt wird, gegenüber dem ersten Mal beispielsweise verdoppelt und so weiter. Auf diese Weise lässt sich eine von der natürlichen e-Funktion deutlich abweichende Abkühlkurve erzielen, beispielsweise eine nahezu lineare und steile Abkühlkurve, insbesondere oberhalb von 100 Grad.

Die Erfindung ist nicht auf die Verwendung von Wasser als Medium beschränkt. Beispielsweise können auch Hartparaffine mit Phasenübergangstemperaturen zwischen 50 und 62 Grad vom festen in den flüssigen Aggregat-Zustand verwendet werden, oder alternativ auch Mikrowachse mit etwas darüber liegenden Schmelztemperaturen.

Hierbei lässt sich die Schmelzwärme oder Schmelzenthalpie von etwa 220 kJ pro kg ausnutzen.

Wasser hat demgegenüber eine etwas höhere Schmelzwärme von 330 kJ pro kg, erfordert jedoch eine Abkühlung auf 0 Grad, also deutlich unterhalb der Raumtemperatur, um die Schmelzenthalpie ausnutzen zu können.

Es ist auch möglich, die für die Abkühlung erforderliche Menge an Medium an die Erfordernisse anzupassen, z.B. zu erhöhen; diese lässt sich auch vorab berechnen.

Die Verdampfungsenthalpie von Wasser ist erheblich höher und liegt bei etwa 2,2 MJ pro kg.

Erfindungsgemäß ist ein Kontakt zwischen dem Medium und der Muffel erwünscht. Dieser kann in beliebiger geeigneter Weise erfolgen. Beispielsweise ist es möglich, die Muffel mit einer Manschette zu versehen, die Wasser aufgrund der Kapillarwirkung gut verteilt und die Manschette zu befeuchten, um die Erstabkühlung vorzunehmen, und sobald eine bestimmte Temperatur beispielsweise unterhalb von 200 Grad Celsius erreicht ist, eine Intensivbefeuchtung nach und nach intensiver vorzunehmen, bis schließlich die Muffel samt Manschette in ein Behältnis mit Wasser eingesetzt wird.

Erfindungsgemäß wichtig ist die gleichmäßige Zufuhr des Mediums rings um das Dentalrestaurationsteil. Erst dadurch und durch die zunehmende Zufuhr des Mediums entsteht der überall gleiche, also konstante Temperaturgradient innerhalb der Muffel, der erfindungsgemäß ausgenutzt wird, um sowohl eine rasche Abkühlung als auch die Vermeidung von Spannungsrissen und damit auch die Vermeidung von Schäden an den in der Muffel eingebetteten Objekte zu gewährleisten.

Es versteht sich, dass das Medium in einem solchem Transportmittel wie beispielsweise der Manschette aufgenommen ist, das eine ausreichende Temperaturfestigkeit aufweist. Eine entsprechende Manschette kann beispielsweise aus Steinwolle bestehen, oder einer anderen Hochtemperatur-Wärmedämmfaser.

Es ist auch möglich, eine mit Wasser getränkte Unterlage bereitzustellen, und die Muffel, gegebenenfalls versehen mit einer Manschette oder auch ohne Manschette, konstant über die Unterlage zu rollen, beispielsweise durch eine Hin- und Her-Bewegung, die aber gewährleistet, dass bei einer translatorischen Bewegungen stets der Umfang der Muffel abgedeckt ist.

Die Unterlage muss insofern eine Länge von mindestens 2 * Radius * Pi haben.

Bevorzugt ist es vorgesehen, den hohlen Bereich des Pressstempels oder Presskolbens, über den eine Pressung des Dentalrestaurationsteils erfolgt ist, von der Zufuhr des Mediums auszusparen. Dieser ist typischerweise zentral in der Muffel angeordnet, so dass er bei Zufuhr des Mediums am Außenumfang der Muffel ohnehin nicht mit dem Medium in Kontakt kommt. Beim gegebenenfalls später vorzusehenden Eintauchen der Muffel in ein mit dem Medium gefülltes Gefäß ist es auch möglich, den zentralen Bereich mit einem Stopfen abzudecken.

Ein solches Eintauchen kann bei Bedarf gegen Ende der Abkühlphase vorgesehen sein, um trotz einer geringen Temperaturdifferenz zwischen den Dentalrestaurationsteilen und der Raumtemperatur doch noch einen gewissen Temperaturgradienten und damit eine entsprechende Abkühlung aufrecht zu erhalten.

Das Medium kann auch in einer solchen Weise zugeführt werden, dass es beim Ende des Abkühlvorgangs seine Phasenübergangs-Enthalpie vollständig verbraucht hat. Wenn beispielsweise als Phasenübergangstemperatur eine Siedetemperatur eingesetzt wird, kann das Medium gegen Ende des Kühlvorgangs vollständig verdampft sein.

Dies hat den Vorteil, dass die Muffel beim Entformen frei vom Medium ist.

Es ist auch möglich, die Muffeltemperatur und damit indirekt die Temperatur des Dentalrestaurationsteils mit entsprechenden Sensoren zu messen, um den Beginn und das Ende des Abkühlvorgangs zu erfassen, und, um den Temperaturgradienten an die erwünschten Werte anzupassen.

Es ist auch möglich, an der Muffel ein Feuchtigkeitssensor anzubringen, um den Verdampfungszustand des Mediums in oder an der Muffel zu überprüfen.

Es ist auch möglich, vorab die Menge des zuzuführenden Mediums über den gewünschten Abkühlvorgang zu berechnen und ein Behältnis zu realisieren, in dem die Muffel eingebracht ist und diesem Behältnis dann nach und nach die erwünschte Menge des Mediums zuzuführen, bis die Wärmeenergie der Muffel im Wesentlichen in die Verdampfungs- und/oder Schmelzenthalpie des Mediums übergeht und insofern aufgebraucht wird.

Das Entformen des Mediums kann in einer beliebigen geeigneten Weise erfolgen, beispielsweise durch Sandstrahlen. Es ist auch möglich, beliebige andere Trennmittel einzusetzen, um eine Grobentformung zu realisieren, und das Sandstrahlen auf Feinsandstrahlen des Bereichs der Muffel, die Dentalrestaurationsteile enthält, zu beschränken.

Erfindungsgemäß günstig ist es auch, wenn bei Beginn des Kühlvorgangs die Temperatur der Muffel erfasst wird. Dies kann beispielsweise mittels eines Temperatursensors und/oder eines Bimetalls erfolgen. Das Kühlen mittels des Kühlmediums wird freigegeben, sobald die Temperatur der frei kühlenden Muffel einen vorgegebenen Schwellenwert unterschreitet.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine schematische Darstellung einer Muffel mit darin befindlichen gestrichelt angedeuteten Dentalrestaurationsteilen und einer Manschette, zur Darstellung zweier Ausführungsformen eines erfindungsgemäßen dentalen Kühlverfahrens und einer Kühlvorrichtung, die nicht Teil der beanspruchten Erfindung ist;
- Fig. 2a bis 2d: schematische grafische Darstellungen von Temperaturgradienten und Temperaturen beim Stand der Technik und bei der Erfindung;
- Fig. 3: ein Diagramm zur Darstellung der spezifischen Schmelzenthalpie und spezifischen Verdampfungsenthalpie von Wasser; und
- Fig. 4: eine schematische Darstellung einer weiteren Ausführungsform einer Kühlvorrichtung, die nicht Teil der beanspruchten Erfindung ist.

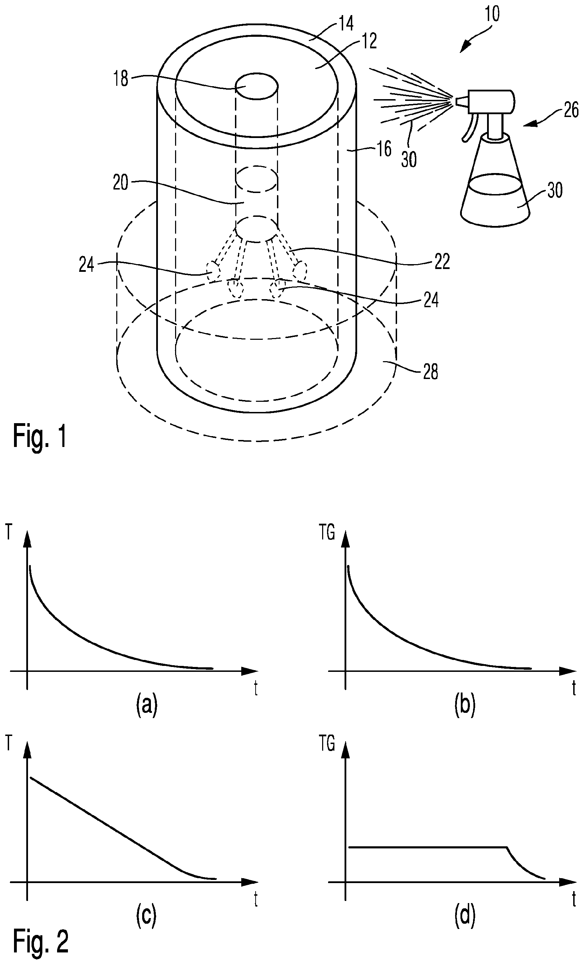

In Fig. 1 ist eine dentale Kühlvorrichtung 10 schematisch dargestellt. Sie umfasst eine Muffel 12, die mit einer Manschette 14 an ihrer Mantelfläche 16 umgeben ist, wobei im dargestellten Ausführungsbeispiel die Manschette 14 die Muffel noch etwas nach oben überragt.

Das Medium ist beim Beginn des Kühlens kühler als die Muffel und bildet insofern einen Wärmespeicher, nämlich einen Latentwärmespeicher zur kontrollierten Aufnahme von Wärmeenergie der Muffel.

Die Muffel weist in an sich bekannter Weise eine Pressöffnung 18 auf, in der sich ein AL₂O₃-Kolben 20 befindet, der den Pressstempel von dem Rohling vor dem Pressen trennt. Ferner erstrecken sich in der Muffel Zubringerkanäle 22, über welche das Pressmaterial in Formhohlräume eindringen kann, in denen sich nun, also nach dem Pressen, Dentalrestaurationsteile 24 befinden.

Wie ersichtlich ist, erstrecken sich diese etwas außerhalb des Kanals der Pressöffnung 18, also der Mantelfläche 16 etwas stärker benachbart.

Schematisch ist in Fig. 1 zudem eine Sprühvorrichtung 26 angedeutet, sowie gestrichelt ein Gefäß 28, dass die Muffel 12 und die Manschette 14 aufnimmt.

Zur Realisierung des erfindungsgemäßen Verfahrens wird die Muffel 12 mit der Manschette 14 versehen. Die Manschette besteht aus einer Hochtemperatur-Wärmedämmfaser, wie sie beispielsweise von der Firma Rath angeboten wird. Diese ist bis 1200 Grad Celsius wärmefest, so dass sie ohne Beschädigung über die heiße Muffel gestülpt werden kann.

Die Muffel 12 wird mit der Manschette 14 in das Gefäß 28 eingesetzt. Das Gefäß 28 ist in diesem Zustand bei heißer Muffel leer, also nicht mit einem Medium wie Wasser gefüllt.

Nach dem Einsetzen der Muffel 12 in das Gefäß 28 wird die Sprühvorrichtung 26 erstmals vorsichtig betätigt. Die Sprühvorrichtung 26 ist mit dem Medium 30 gefüllt, beispielsweise Wasser oder mit einem beliebigen anderen geeigneten kühlenden Wärmeträgermedium.

Das Medium 30 wird versprüht und gelangt auf die Manschette. Das Ansprühen erfolgt etwas oberhalb der Mitte, also etwa bei 70% der Höhe der Muffel und ist sowohl vertikal als auch horizontal verteilt.

Hieran anschließend wird entweder die Muffel oder die Sprühvorrichtung soweit gedreht, dass ein zuvor trockener Bereich der Manschette 14 von der Sprühvorrichtung 26 beaufschlagbar ist.

Dies wird fortgesetzt, bis sämtliche Umfangbereiche der Manschette 14 von der Sprühvorrichtung 26 mit dem Medium 30 beaufschlagt sind.

Das Medium 30 verteilt sich in den Außenbereichen der recht dicken Manschette 14 zunächst sowohl vertikal als auch horizontal, so dass dort eine gleichmäßige Durchfeuchtung vorliegt.

Es diffundiert auch nach innen, also zur Muffel 12 hin.

Sobald es mit der Mantelfläche 16 der Muffel im Kontakt kommt verdampft es, so dass eine entsprechende Abkühlung der Mantelfläche erfolgt.

Diese erfolgt gleichmäßig von allen Seiten, nachdem die Manschette 14 gleichmäßig befeuchtet wurde.

Die Befeuchtung wird aufrechterhalten und nimmt zu, so dass die Abkühlung vergleichsweise immer intensiver ist.

Zugleich sinkt die Temperaturdifferenz zwischen dem kalten Medium 30, das sich beispielsweise auf Raumtemperatur befindet, und der heißen Muffel 12.

Schließlich kann auch das Gefäß 28 mit dem Medium gefüllt werden, dies aber erst gegen Ende des Kühlzyklus. Hierdurch wir die Manschette 14 großflächig und ganz intensiv befeuchtet, was zur weiteren Abkühlung dient.

Durch die kontinuierliche und immer stärker werdende Befeuchtung der Manschette 14 erfolgt eine zunehmende Kühlung. Dies führt dazu, dass kein exponentialförmiger Temperaturgradient, sondern ein Temperaturgradient mit konstanter Steigung entsteht, mindestens bis knapp oberhalb der Raumtemperatur.

Dies ist in Fig. 2 dargestellt.

In Fig. 2a ist eine natürliche Abkühlung, wie sie weithin verbreitet realisiert wird, dargestellt, gemäß welcher die Temperatur mit einer e-Funktion abfällt.

Der Temperaturgradient ist, von innen nach außen betrachtet, also von dem heißen Dentalrestaurationsteil nach außen, an der kühlenden Oberfläche, die erste Ableitung der Temperatur.

Er ist zunächst groß und fällt dann ausgehend von dem Maximalwert des Temperaturgradienten stark ab, nachdem die erste Ableitung einer e-Funktion wiederum eine e-Funktion ist.

Dies ist in Fig. 2b dargestellt.

Der hier dargestellte Temperaturgradient TG ist der lokale Temperaturgradient, also gemessen an einer Stelle der Muffel knapp außerhalb der Dentalrestaurationsteile, aber über die Zeit betrachtet.

Erfindungsgemäß wird die Temperatur nicht mit einer e-Funktion reduziert, sondern mit einem konstanten zeitlichen Gradienten TG.

Dementsprechend ergibt sich für die Temperatur erfindungsgemäß eine konstant abfallende Gerade, bis diese nahe der Raumtemperatur wiederum in eine e-Funktion übergeht, vgl. Fig. 2c.

Dementsprechend ist der erfindungsgemäße lokale Temperaturgradient, über die Zeit betrachtet, die erste Ableitung dieser Geraden, also zunächst konstant, bis zu dem Beginn der e-Funktion.

Dies ist in Fig. 2d dargestellt.

Wie es sich aus dem Vergleich der Fig. 2b und 2d ergibt, ist der maximale Temperaturgradient TG, der für die Erzeugung von Spannungsrissen verantwortlich ist, erfindungsgemäß wesentlich geringer als beim Stand der Technik.

Erfindungsgemäß ist es vorgesehen, die Menge des Mediums, die zur Kühlung verwendet wird, so zu begrenzen - oder vorab so zu berechnen, dass das Medium verdampft ist, wenn das Ende des Kühlzyklus erreicht ist. Hierdurch wird vermieden, dass sich die Einbettmasse der Muffel mit Wasser vollsaugt, wodurch sie sehr hart würde und nur mit sehr hohem Sandstrahl-Aufwand entfernt werden könnte.

Es kann auch günstig sein, beim Ende des erfindungsgemäßen Kühlvorgangs eine Haltezeit von beispielsweise 1 min vorzusehen, in welcher Reste des Wassers noch verdampfen oder verdunsten.

Während bei der klassischen Kühlung mit Kühlzeiten zwischen 60 min und 90 min, je nach Größe der verwendeten Muffel, zu rechnen ist, ließ sich erfindungsgemäß die Kühlzeit auf 5 min bis 15 min reduzieren, ohne Nachteile bei der Qualität des Dentalrestaurationsteils, also auch ohne Spannungsrisse.

Diese Kühlzeiten unterbieten die mit einem Ventilator erreichbaren Kühlzeiten deutlich und reduzieren sie beispielsweise auf 1/3 dieser (10 min gegenüber 30 min).

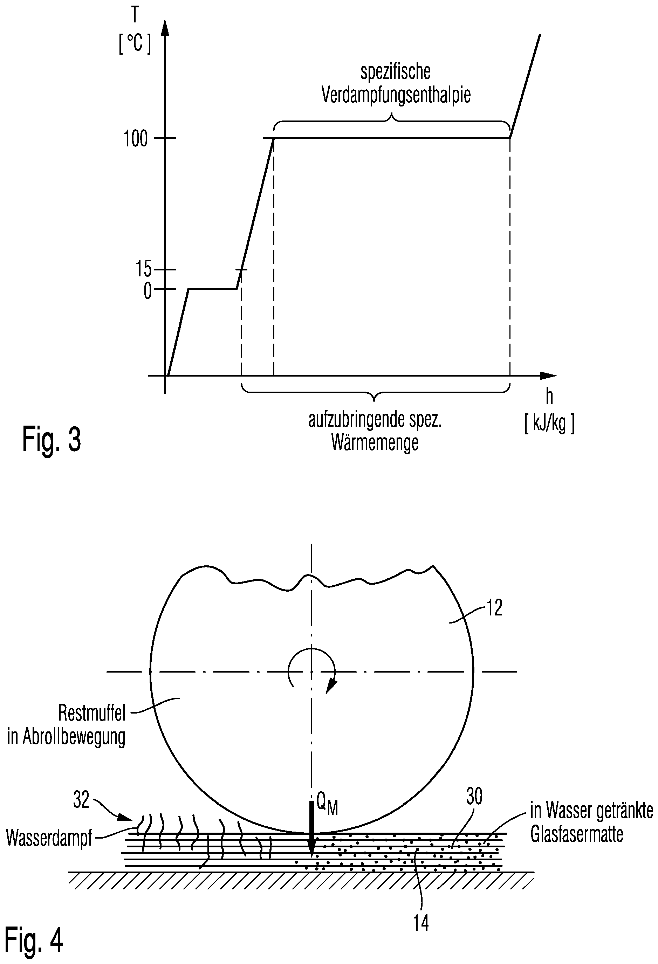

Aus Fig. 3 ist ersichtlich, wie sich die spezifische aufzubringende Wärmemenge zusammensetzt. Wie ersichtlich ist, ist die spezifische Verdampfungsenthalpie, hier von Wasser betrachtet, der deutlich überwiegende Teil. Die für die Abkühlung von 100 Grad auf 15 Grad aufzubringende Kältemenge - beziehungsweise die entsprechende Wärmemenge - beträgt lediglich einen Bruchteil, beispielsweise 1/8, der Verdampfungsenthalpie.

Dies erklärt die besondere Wirksamkeit des erfindungsgemäßen Verfahrens.

Es ist auch ersichtlich, dass die Schmelzenthalpie deutlich größer als eine normale gespeicherte Wärmemenge ohne Phasenübergang ist, jedoch deutlich geringer als die spezifische Siedeenthalpie.

Aus Fig. 4 ist ersichtlich, in welcher Weise ein Abrollen der Muffel 12 auf einer Manschette 14 erfolgen kann. Das Medium 30 ist in der Manschette gespeichert als Latentwärmespeicher und verdampft nach dem Abrollen, so dass es als Wasserdampf 32 die Manschette verlässt. Die zur Manschette übergehende Wärmeenergie der Muffel 12 wird in Fig. 4 mit Q_{M} dargestellt.

Die Muffel 12 wird einmal vollständig auf der Manschette 14 nach rechts abgerollt. Das gespeicherte Wasser 30 hat sich zu Wasserdampf verflüchtigt. Die Manschette 14 wird erneut benetzt, und die Muffel 12 wird nach links, also in die Gegenrichtung, über die Manschette 14 gerollt, wiederum um mindestens eine Umdrehung.

Auch hier ist es möglich, die Zufuhr des Mediums 30 zu steuern, also zunächst wenig Medium 30 zuzuführen und die Zufuhr dann zu erhöhen.

Das erfindungsgemäße Verfahren lässt sich auch automatisieren. Beispielsweise ist es möglich, die Sprühvorrichtung 26 gemäß Fig. 1 mit einer Rotationsführung zu versehen und automatisch zu betätigen, zunächst weniger, dann mehr.

Alternativ kann das Gefäß 28 oder die Muffel 12 auch auf einem Drehteller stehen und kontinuierlich gedreht werden, während immer stärker Medium 30 zugeführt wird.

Das Gefäß 28 und eine Lagerung für die Muffel 12 können auch so ausgebildet sein, dass die Muffel 12 zunächst wenig eintaucht und dann immer stärker eintaucht, wobei ein Flüssigkeitspegel des Mediums 30 in dem Gefäß 28 besteht.

Das Gefäß 28 kann auch wesentlich höher sein, als in Fig. 1 dargestellt und beispielsweise die Muffel 12 auch vollständig aufnehmen.

Ferner ist es auch möglich, das Sprühen oder überhaupt die Zufuhr des Mediums 30 zu realisieren, ohne dass eine Manschette 14 verwendet wird.

Die Sprühvorrichtung 26 sprüht dann direkt auf das Medium, und die Vergleichsmäßigung erfolgt durch eine sorgfältigere Sprühverteilung.

Ferner ist es auch möglich, bei der Ausführungsform gemäß Fig. 4 eine Automatisierung vorzunehmen. Das Abrollen der Muffel 12 auf der Manschette 14 kann dann gesteuert erfolgen, beispielsweise, indem die Muffel 12 drehbar an ihrer Achse gelagert ist und abgerollt wird, wobei eine Bewegung in horizontaler Richtung hin- und her erfolgt. Alternativ kann auch die drehbare Lagerung der Muffel 12 realisiert sein, und die Manschette 14 unter der Muffel in hin- und her bewegt werden.

Auch hier ist es möglich, anstelle der Manschette 14 eine beliebige andere geeignete saugfähige Unterlage oder Medium-Aufnahmevorrichtung zu realisieren, die es ermöglicht, das Medium 30 aufzusaugen und in Dampfform erneut abzugeben.

Beispielsweise kann als Medium auch ein Paraffin oder ein Mikrowachs verwendet werden, das auf die Unterlage 14 geträufelt wird, wobei die Schmelzenthalpie des Paraffins ausgenutzt wird.

Das Paraffin kann auch in einem z.B. in einer metallischen und noch elastisch verformbaren, aber für flüssiges Paraffin dichten Manschette formschlüssig um eine zu kühlende Muffel gewickelt bzw. dort aufgebracht werden.

## Patentansprüche

1. Dentales Kühlverfahren, bei welchem eine Muffel (12), die in dem Verfahren gekühlt wird, auf eine Ausformungstemperatur von weniger als 80°C, bevorzugt weniger als 50°C gekühlt wird, wobei
die Kältequelle ein Medium (30), insbesondere ein festes oder flüssiges Medium (30), mit einer Schmelz- oder Verdampfungstemperatur höher als Raumtemperatur, aufweist, das der Muffel (12) zugeführt, also in direkten oder indirekten Kontakt gebracht wird,
wobei die Kühlung mittels Latentwärmespeicher erfolgt,
wobei die Menge des Mediums (30) mindestens ausreichend ist, insbesondere vorab so berechnet wird, dass die Muffel (12) mindestens auf eine Phasenübergangstemperatur des Mediums (30) heruntergekühlt wird, **dadurch gekennzeichnet, dass**
das Medium (30) in einer hochtemperaturfesten, faserigen Masse wie einer Hochtemperatur-Wärmedämmfaser aufgenommen ist, die zur Kühlung der Muffel (12) mit dieser an selektiven Stellen, insbesondere allen Stellen des Umfangs der Muffel (12), in Kontakt gebracht wird.

2. Verfahren nach Anspruch 1, **dadurch gekennzeichnet, dass** die Abkühlung des Mediums (30) mittels der Kältequelle auf eine Temperatur unterhalb der Phasenübergangstemperatur erfolgt.

3. Verfahren nach einem der vorherigen Ansprüche, **dadurch gekennzeichnet, dass** die Muffel (12) durch den Kontakt von einer Temperatur oberhalb der Phasenübergangstemperatur, auf eine solche unterhalb der Phasenübergangstemperatur gekühlt wird.

4. Verfahren nach einem der vorherigen Ansprüche, **dadurch gekennzeichnet, dass** das Medium (30) überwiegend mit der Mantelfläche der Muffel direkt oder indirekt in Kontakt gebracht wird.

5. Verfahren nach einem der vorherigen Ansprüche, **dadurch gekennzeichnet, dass** die Muffel (12) für die Kühlung der Muffelaußenseite mit einer mit dem Medium (30) versehenden Manschette (14) mindestens teilweise umgeben wird, insbesondere vollständig umgeben und insbesondere ringsum umgeben wird.

6. Verfahren nach einem der vorherigen Ansprüche, **dadurch gekennzeichnet, dass** die hochtemperaturfeste, faserige Masse zur Kühlung der Muffel (12) mit dieser durch gegenseitiges Abrollen an selektiven Stellen, insbesondere allen Stellen des Umfangs der Muffel (12), in Kontakt gebracht wird.

7. Verfahren nach einem der vorherigen Ansprüche, **dadurch gekennzeichnet, dass** das Medium (30), um den Umfang der Muffel (12) gleichmäßig verteilt, dieser beim Beginn des Kühlvorgangs zugeführt wird, insbesondere mittels Sprühen und/oder Eintauchen in ein geeignetes Behältnis.

8. Verfahren nach einem der vorherigen Ansprüche, **dadurch gekennzeichnet, dass** das Medium (30) bei Abschluss des Kühlvorgangs in und an der Muffel (12) vollständig verflüssigt oder verdampft ist.

9. Verfahren nach einem der vorherigen Ansprüche, **dadurch gekennzeichnet, dass** ein Feuchtesensor oder eine Mehrzahl von Feuchtesensoren den Feuchtigkeitsgehalt des Mediums (30) oder der Muffel (12) oder ein entsprechender Sensor die Temperatur der Muffel (12) beim Abschluss des Kühlvorgangs erfassen bzw. erfasst und eine Steuervorrichtung das Entformen eines Dentalrestaurationsteils aus der Muffel (12) freigibt, wenn die gemessene Feuchtigkeit und/oder Temperatur einen vorgegebenen Schwellenwert unterschreitet.

10. Verfahren nach einem der vorherigen Ansprüche, **dadurch gekennzeichnet, dass** für die Aufnahme des Mediums (30), insbesondere gegen Ende der Abkühlphase, ein topfförmiger Behälter vorgesehen ist, dessen Innendurchmesser den Außendurchmesser der Muffel (12) um weniges überschreitet und dass der sich zwischen Muffel (12) und Behälter ergebende Ringspalt hinsichtlich seines Volumens so berechnet ist, dass er der Menge des Mediums (30) entspricht, dessen Verdampfungsenthalpie verbraucht werden soll.

11. Verfahren nach einem der vorherigen Ansprüche, **dadurch gekennzeichnet, dass** bei der Berechnung der Schmelzenthalpie und/oder Verdampfungsenthalpie ein Zuschlag für die Masse des bereitzustellenden Kühlmediums eingerechnet wird, wenn die Entformungstemperatur unterhalb der Schmelztemperatur oder Verdampfungstemperatur ist.

12. Verfahren nach einem der vorherigen Ansprüche, **dadurch gekennzeichnet, dass** beim Beginn des Kühlvorgangs erfasst wird, welche Temperatur die Muffel (12) hat, und dass das Kühlen mittels des Kühlmediums freigegeben wird, sobald die Temperatur der frei kühlenden Muffel (12) einen vorgegebenen Schwellenwert unterschreitet.

13. Verfahren nach einem der vorherigen Ansprüche, **dadurch gekennzeichnet, dass** nach Abschluss des Kühlvorgangs, insbesondere nach vollständigem Verflüssigen oder Verdunsten des Kühlmediums, ein Dentalrestaurationsteil in der Muffel (12) entformt wird, insbesondere durch Strahlen wie Sandstrahlen.

## Claims

1. A dental cooling method in which a muffle (12), which is cooled in the method, is cooled to a divesting temperature of less than 80°C, preferably less than 50°C, wherein
the cooling source is a medium (30), in particular a solid or liquid medium (30), having a melting or evaporation temperature higher than room temperature, which is fed to the muffle (12), i.e. is brought into direct or indirect contact,
wherein cooling is effected by means of latent heat accumulators,
wherein the quantity of the medium (30) is at least sufficient, in particular is calculated in advance such that the muffle (12) is cooled to at least a phase transition temperature of the medium (30), **characterized in that**
the medium (30) is accommodated in a high-temperature-resistant, fibrous mass, such as a high-temperature thermal insulation fiber, which is brought into contact with the muffle (12) for cooling thereof at selective locations, in particular at all locations of the circumference of the muffle (12).

2. The method according to claim 1, **characterized in that**, cooling of the medium (30) by means of the cooling source is performed to a temperature below the phase transition temperature.

3. The method according to one of the preceding claims, **characterized in that**, by means of the contact, the muffle (12) is cooled from a temperature above the phase transition temperature to a temperature below the phase transition temperature.

4. The method according to one of the preceding claims, **characterized in that** the medium (30) is brought into direct or indirect contact predominantly with the lateral surface of the muffle.

5. The method according to one of the preceding claims, **characterized in that** the muffle (12) for cooling the outside of the muffle is at least partially surrounded, in particular completely surrounded and in particular circumferentially surrounded, by a sleeve (14) providing the medium (30).

6. The method according to one of the preceding claims, **characterized in that** the high-temperature-resistant, fibrous mass for cooling the muffle (12) is brought into contact with the latter by mutual rolling at selective locations, in particular at all locations of the circumference of the muffle (12).

7. The method according to one of the preceding claims, **characterized in that** the medium (30), evenly distributed around the circumference of the muffle (12), is supplied to the latter at the start of the cooling process, in particular by spraying and/or immersion in a suitable container.

8. The method according to one of the preceding claims, **characterized in that** the medium (30) is completely liquefied or evaporated in and at the muffle (12) at the end of the cooling process.

9. The method according to one of the preceding claims, **characterized in that** a moisture sensor or a plurality of moisture sensors detect(s) the moisture content of the medium (30) or the muffle (12) or a respective sensor the temperature of the muffle (12) at the end of the cooling process, and a control device enables divesting of a dental restoration part from the muffle (12) when the moisture and/or temperature measured falls below a predetermined threshold value.

10. The method according to one of the preceding claims, **characterized in that** a pot-shaped container is provided for receiving the medium (30), in particular towards the end of the cooling phase, the inner diameter of which exceeds the outer diameter of the muffle (12) by a small amount, and **in that** the annular gap resulting between the muffle (12) and the container is calculated with respect to its volume such that it corresponds to the quantity of the medium (30), the evaporation enthalpy of which is to be consumed.

11. The method according to one of the preceding claims, **characterized in that**, when calculating the melting enthalpy and/or evaporation enthalpy, an addition to the mass of the cooling medium to be provided is included, when the divesting temperature is below the melting temperature or evaporation temperature.

12. The method according to one of the preceding claims, **characterized in that**, at the start of the cooling process, the temperature of the muffle (12) is detected, and **in that** cooling is enabled by means of the cooling medium as soon as the temperature of the muffle (12), which is cooling freely, falls below a predetermined threshold value.

13. The method according to one of the preceding claims, **characterized in that** after completion of the cooling process, in particular after complete liquefaction or evaporation of the cooling medium, a dental restoration part in the muffle (12) is divested, in particular by blasting such as sand blasting.

## Revendications

1. Procédé de refroidissement dentaire, dans lequel un moufle (12), qui est refroidi dans le procédé, est refroidi à une température de moulage inférieure à 80°C, de préférence inférieure à 50°C, où la source de froid présente un milieu (30), en particulier un milieu solide ou liquide (30), avec une température de fusion ou d'évaporation supérieure ä la température ambiante, qui est amené au moufle (12), donc mis en contact direct ou indirect,
où le refroidissement est assuré par un accumulateur de chaleur latente,
où la quantité du milieu (30) est au moins suffisante, notamment calculée eu préalable de telle manière à refroidir le moufle (12) au moins à une température de transition de phase du milieu (30), **caractérisé en ce que** le milieu (30) est contenu dans une masse fibreuse résistante aux hautes températures, telle qu'une fibre d'isolation thermique à haute température, qui est mise en contact avec le moufle (12) à des endroits sélectifs, en particulier à tous les endroits de la périphérie du moufle (12), pour refroidir le moufle (12).

2. Procédé selon la revendication 1, **caractérisé en ce que** le refroidissement du milieu (30)au moyen de la source de froid est effectué à une température inférieure à la température de transition de phase.

3. Procédé selon l'une des revendications précédentes, **caractérisé en ce que** le moufle (12) est refroidi par le contact d'une température supérieure à la température de transition de phase, à une température inférieure à la température de transition de phase.

4. Procédé selon l'une des revendications précédentes, **caractérisé en ce que** le milieu (30) est principalement mis en contact, directement ou indirectement, avec la surface de l'enveloppe du moufle.

5. Procédé selon l'une des revendications précédentes, **caractérisé en ce que**, pour le refroidissement de la face extérieure du moufle (12), le moufle est au moins partiellement entouré d'une manchette (14) pourvue du milieu (30), en particulier complètement entouré et en particulier entouré tout autour.

6. Procédé selon l'une des revendications précédentes, **caractérisé en ce que**, pour refroidir le moufle (12), la masse fibreuse résistant aux hautes températures est mise en contact avec celui-ci par déroulement mutuel à des endroits sélectifs, notamment tous les endroits de la périphérie du moufle (12).

7. Procédé selon l'une des revendications précédentes, **caractérisé en ce que** le moyen (30) réparti uniformément autour de la périphérie du moufle (12), est amené à celui-ci au début de l'opération de refroidissement, notamment par pulvérisation et/ou par immersion dans un récipient approprié.

8. Procédé selon l'une des revendications précédentes, **caractérisé en ce que** le milieu (30) est complètement liquéfié ou vaporisé à la fin du processus de refroidissement dans et sur le moufle (12).

9. Procédé selon l'une des revendications précédentes, **caractérisé en ce qu'**un capteur d'humidité ou une pluralité de capteurs d'humidité détectent la teneur en humidité du milieu (30) ou du moufle (12) ou un capteur correspondant détecte la température du moufle (12) à la fin du processus de refroidissement et qu'un dispositif de commande autorise le démoulage d'une pièce de restauration dentaire hors du moufle (12) lorsque l'humidité et/ou la température mesurées sont inférieures à une valeur seuil prédéfinie.

10. Procédé selon l'une des revendications précédentes, **caractérisé en ce que**, pour la réception du milieu (30), en particulier vers la fin de la phase de refroidissement, un récipient en forme de pot est prévu, dont le diamètre intérieur dépasse de peu le diamètre extérieur du moufle (12) et **en ce que** l'espace annulaire résultant entre le moufle (12) et le récipient est calculé, en ce qui concerne son volume, de telle sorte qu'il correspond à la quantité du milieu (30) dont l'enthalpie d'évaporation doit être consommée.

11. Procédé selon l'une des revendications précédentes, **caractérisé en ce que**, lors du calcul de l'enthalpie de fusion et/ou de l'enthalpie de vaporisation, un supplément pour la masse du fluide de refroidissement à fournir est inclus, lorsque la température de démoulage est inférieure à la température de fusion ou à la température de vaporisation.

12. Procédé selon l'une des revendications précédentes, **caractérisé en ce qu'**au début du processus de refroidissement, la température du moufle (1 2) est détectée, et **en ce que** le refroidissement au moyen du fluide de refroidissement est validé dès que la température du moufle (12) à refroidir librement passe en dessous d'une valeur seuil prédéfinie.

13. Procédé selon l'une des revendications précédentes, **caractérisé en ce qu'**à la fin du processus de refroidissement, en particulier après la liquéfaction ou l'évaporation complète du milieu de refroidissement, une pièce de restauration dentaire est démoulée dans le moufle (12), en particulier par sablage.
